# EUROPEAN PATENT SPECIFICATION

(11) **EP 3 898 356 B1**
(45) Date of publication and mention of the grant of the patent: **09.07.2025**
(21) Application number: 19838958.7
(22) Date of filing: 19.12.2019
(51) Int. Cl.: B60T 8/36

(54) **COMPACT SYSTEM FOR ABS WHICH CAN BE INSTALLED ON A MOTORCYCLE AND MOTORCYCLE COMPRISING SUCH A SYSTEM**
KOMPAKTES SYSTEM FÜR ABS ZUM EINBAU IN EIN MOTORRAD UND MOTORRAD MIT EINEM SOLCHEN SYSTEM
SYSTÈME COMPACT POUR ABS POUVANT ÊTRE INSTALLÉ SUR UNE MOTOCYCLETTE ET MOTOCYCLETTE COMPRENANT UN TEL SYSTÈME

(30) Priority: 20.12.2018 IT 201800020347
(43) Date of publication of application: 27.10.2021
(73) Proprietor: Piaggio & C. SpA, 56025 Pontedera (IT)
(72) Inventor: ROSELLINI, Walter, 56025 Pontedera (IT); PROFETI, Marco, 56025 Pontedera (IT)
(74) Representative: Savi, Massimiliano
(86) International application number: PCT/IB2019/061069
(87) International publication number: WO 2020/128930

(56) References cited:
- EP-A1- 2 263 925
- EP-A2- 2 048 051
- WO-A1-2018/183452
- JP-A- 2014 148 308

## Description

### FIELD OF THE INVENTION

The present invention relates to the field of motorcycles and motor vehicles. In particular, the present invention relates to a compact system for ABS, comprising an ABS unit, at least one dividing valve and a compact support thereof. The present invention further relates to a motorcycle or motor vehicle comprising such a system.

### PRIOR ART

ABS *(Antiblock Braking System*) or anti-locking systems have been known for decades. These are driving safety systems, designed to prevent the locking of the vehicle wheels ensuring their driveability while braking. Such systems have evolved over the years to the extent that they have considerably reduced the number of road accidents and have become mandatory for all vehicles, in almost all countries worldwide.

Such systems basically comprise an electronic control unit, called ABS unit, capable of calculating the rotation speed of each vehicle wheel, by virtue of appropriate sensors and angle position transducers positioned on the wheels. In particular, the ABS comprises toothed phonic wheels rigidly connected to the vehicle wheels and a proximity sensor which detects the passage of the teeth of the wheels. The control unit counts the number of teeth which pass in front of the sensor in a predetermined unit of time and calculates the rotation speed of each individual wheel.

In the event of sudden braking, the wheels lock and thus the calculated speed will be zero. In these conditions, the control unit controls the hydraulic pump of the braking system in order to reduce the braking force and thus prevent the wheels from slipping if they are lock. In such a manner, the ABS reduces braking distances and maintains vehicle directionality, i.e. the possibility of controlling its direction.

Nowadays, in most cases, the ABS is integrated in, i.e. is supported by, auxiliary safety systems, such as EBD (Electronic Brakeforce Distribution), BAS (Brake Assistant System), ASR (Anti-Slip Regulation), ESP (Electronic Stability Program), or similar auxiliary systems, which require the presence of one or more dividing valves.

In motorcycles and motor vehicles, the ABS unit, i.e. the electronic control unit, is positioned in a remote location with respect to the dividing valve and, in presence of two dividing valves, the second dividing valve is positioned in a further location, remote with respect to the first two. In particular, the ABS unit is usually located under the seat, the front valve is located at the handlebar and the rear valve is located at the pedal brake, when present.

Such a configuration has a number of disadvantages, such as the need to use long connecting piping between the ABS unit, the valves and the brake calipers, between the valves and the pumps of the respective braking systems and possibly between the two valves.

The location of the ABS unit with respect to the valves and of the first valve with respect to the second one, in addition to the length of the piping, and therefore the excessive volumetric expansion, implies the need to use flexible piping. Such piping, due to its nature, may deform, especially at given critical points, to the extent of being crushed, thereby compromising the operation of the entire system. Furthermore, such piping has filling problems, i.e. the normal flow of fluids contained therein is prevented where the piping is crushed.

Moreover, flexible piping does not have a high degree of strength. Considering that the connection piping between ABS units and dividing valves takes on a high pressure of the fluids running through it, it can be understood that it constitutes a critical point of the structure, since its operation, and consequently that of the entire system, could be compromised.

Additionally, the current arrangement of the ABS unit and of the dividing valves, and the length of the aforesaid piping create considerable problems during assembly. At present, the assembly operator must firstly mount the ABS unit and the valves on the motorcycle or motor vehicle and then connect the numerous, long pieces of connecting piping. In the case of a simple braking system, for example, there are five of such pieces of piping and each one is intended to be connected at two ends to connect two components, so that at least ten connections must be made. Therefore, serious connection mistakes may be committed if the installer or assembly operative is not particularly trained for the purpose and/or is not particularly experienced.

Furthermore, even if completed without errors, such an assembly method is long and complex with obvious drawbacks from the point of view of productivity.

International patent document WO2018183452 discloses an example of a braking system provided with an anti-lock braking control module and a first brake master cylinder hydraulically coupled to the anti-lock braking control module.

European patent document EP2263925 discloses another example of braking system provided with a brake control system that is received in a waterproof case and can be connected to hydraulic brakes through a plurality of brake pipes.

European patent document EP2048051 discloses another example of braking system comprising a hydraulic brake device for braking of a front wheel and a rear wheel of a motorcycle.

Japanese patent document JP2014148308 discloses an example of a motorcycle ABS hydraulic unit that performs antilock brake control.

The applicant of the present application has identified a need to develop an ABS to address the aforesaid problems.

### SUMMARY OF THE INVENTION

In particular, it is an object the present invention to provide an ABS which is compact and avoids critical issues.

It is a further object of the present invention to create an ABS which achieves a simple and fast assembly process of the ABS unit, of the dividing valves and of the respective piping.

It is a further object of the present invention to make available an ABS which allows using piping which is resistant to mechanical deformation and to high internal fluid pressures.

These and other objects are achieved by means of a system the features of claim 1.

Such a system is compact because the support comprises one or more valve housings, which are adjacent to the housing for the ABS unit. In other words, the ABS unit and the valves are positioned next to one another, in a single location and are no longer displaced, thus solving the above-mentioned problems. Indeed, such a configuration achieves a reduction in the length of the piping, with a consequent reduction in the overall dimensions and critical passages. Furthermore, the disclosed system allows reducing rigid connection piping, at least between the ABS unit and the dividing valves, thus avoiding the above-mentioned critical points. In particular, in addition to being more compact, the rigid piping also has improved resistance to mechanical deformation and is, therefore, are not subject to crushing. It is also highly resistant to operating pressures and therefore does not have the problem of hydraulic fluids.

Above all, a system with the disclosed characteristics results in a simple and fast installation process of the ABS, of the valves and of the respective piping.

Indeed, such a system allows pre-assembling various components (ABS units, dividing valves and some connecting piping), in a special station, outside the assembly line of the motorcycle or motor vehicle, with advantages in terms of time and simplicity of operation. In other words, such a system permits the installation on a workbench of ABS unit and valves on the support; connection piping between ABS unit and valves, connection piping between valves and braking system pumps at the valves, connecting piping between ABS unit and braking system calipers at the ABS unit and, if necessary, piping for connection between the valves, if there is more than one valve. In such a manner, it is sufficient to install a single piece, i.e. the support provided with the aforesaid components, in the assembly line of the vehicle and to connect the free ends of the aforesaid piping at the respective components (e.g. pumps and calipers, for a total of four connections for simple braking systems, i.e. two connections at the two pumps and two connections at the two calipers) to conclude the installation in line of the ABS. This allows avoiding the risk of pipe connection errors resulting in obvious advantages and reduces the degree of specialization and experience required of the installer, in addition to reducing the time and cost of the vehicle assembly line.

Furthermore, the system of the present invention allows simplifying maintenance operations, and therefore reducing the costs, because it is sufficient, in case of need, to dismantle a single piece, i.e. the support, and therefore to remove only one part of the fairing, instead of dismantling the various displaced components and therefore remove the entire fairing.

Preferably, the support is made in one piece, so as to be easily and cost-effectively manufactured by molding.

In an embodiment, there are two dividing valves and they are both positioned in the same housing seat, or they are each positioned in a corresponding housing seat, depending on the construction requirements.

According to preferred embodiments of the invention, the system further comprises at least a first connection tube between the ABS unit and said at least one dividing valve and said first tube is a rigid tube. This results in the above-mentioned advantages of compactness, mechanical strength and resistance to high pressures.

If there were two valves, the system would preferably comprise two first connection tubes, one for each dividing valve.

Advantageously, the system furthermore comprises at least two second connection tubes: a second connection tube between said at least one dividing valve and a first pump of a braking system and a further second connection tube between said at least one dividing valve and a second pump of the braking system.

If there were two dividing valves, the system would further comprise at least one third connection tube between the two dividing valves.

Alternatively, the two dividing valves are connected to each other by means of a branch on the second connection tube.

According to an embodiment, the system comprises a single dividing valve which is:
- connected to the ABS unit by means of a first tube;
- connectable to a first pump of a right brake lever by means of a second tube; and
- connectable to a second pump of a left brake lever by means of a further second tube;
the ABS unit being connectable to a brake caliper of a front wheel of a motorcycle or motor vehicle by means of a further tube and to a brake caliper of a rear wheel of a motorcycle or motor vehicle by means of a further tube.

According to a further embodiment, the system comprises a single dividing valve which is:
- connected to the ABS unit by means of a first tube;
- connectable to a first pump of a right brake lever by means of a second tube; and
- connectable to a second pump of a brake pedal by means of a further second tube;
the ABS unit is connectable to two brake calipers of the same front wheel of a motorcycle or motor vehicle by means of two respective further tubes and to a brake caliper of a rear wheel of a motorcycle or motor vehicle by means of a further tube.

According to a further embodiment, the system comprises:
- a first dividing valve, which is:
   - connected to the ABS unit by means of a first tube;
   - connectable to a first pump of a right brake lever by means of a second tube; and
   - connectable to a second dividing valve by means of a third tube;
- a second dividing valve, which is:
   - connected to the ABS unit by means of a further first tube;
   - connectable to a second pump of a left brake lever by means of a further second tube;
   - connectable to a third pump of a brake pedal by means of a last second tube; and
   - connectable to the first dividing valve by means of said third tube;
and the ABS unit is connectable to two brake calipers of two corresponding front wheels of a motorcycle or motor vehicle by means of two respective further tubes and to a brake caliper of a rear wheel of a motorcycle or motor vehicle by means of a further tube.

In a second aspect, the invention relates to a motorcycle or motor vehicle comprising a system with the aforesaid characteristics.

Preferably, said system is located at the front shield of the frame of the motorcycle or motor vehicle itself, even more preferably it is positioned below the handlebar. Such a position is particularly advantageous because it allows the connection piping between the valve and the pump of the front brake system, or the valves and the respective pumps of the front brake systems to be considerably reduced. In this context, when talking about the ABS, we are referring to an integrated ABS, i.e. to an ABS (comprising an ABS unit and respective piping) and at least one dividing valve.

When talking about the system, we are referring to the system of the present invention.

### LIST OF DRAWINGS

Further features and advantages of the invention will be more apparent from the examination of the following detailed description of some preferred, but not exclusive embodiments of the ABS, illustrated by way of non-limiting example, with reference to the accompanying drawings, in which:
- figure 1 shows a perspective view of the system of the present invention;
- figure 2 shows an exploded view of figure 1;
- figure 3 shows a perspective view of a system according to a preferred embodiment of the present invention; and
- figure 4 shows an example of a diagram of an ABS brake system with a dividing valve on two pumps of corresponding brake levers;
- figure 5 shows an example of an ABS brake system diagram with a dividing valve on two pumps, respectively one of a brake lever and one of a brake pedal; and
- figure 6 shows an example of an ABS brake system with two dividing valves on three pumps, two corresponding brake levers and one brake pedal.

### DETAILED DESCRIPTION

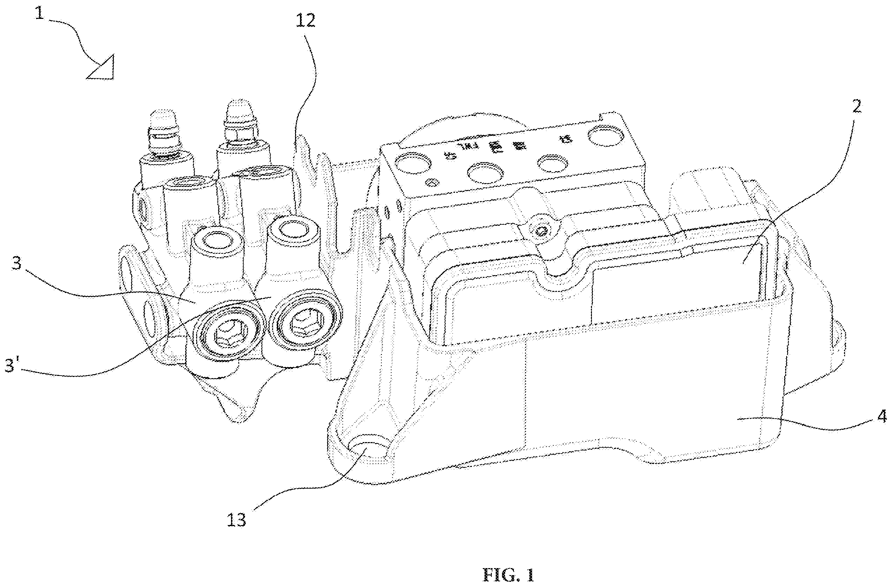

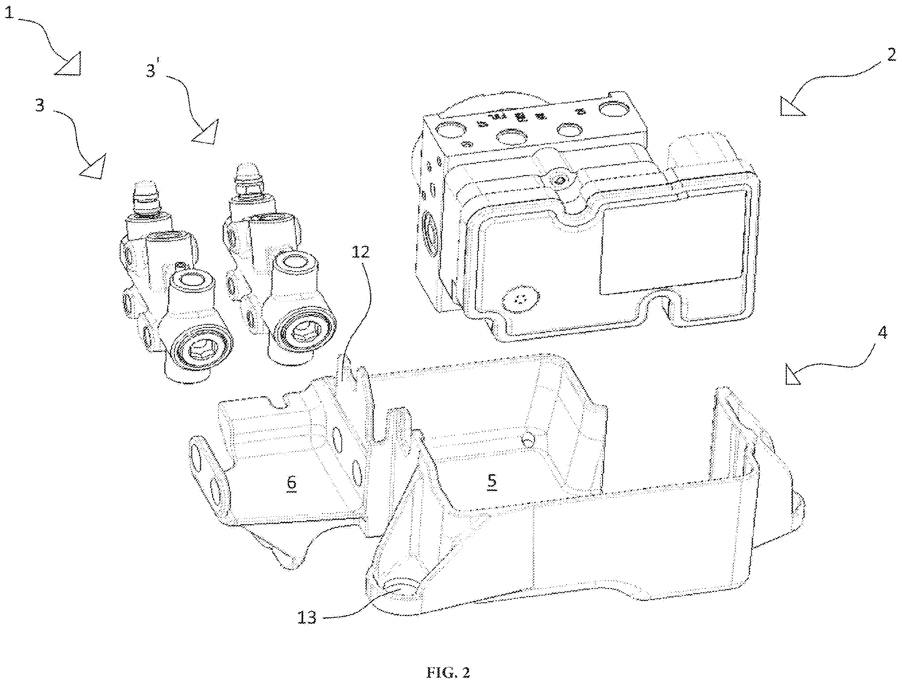

With reference to figures 1-6, reference numeral 1 indicates an ABS according to the present invention as a whole.

The system 1 comprises an ABS unit 2 of known type and at least one dividing valve 3, 3' of known type. The system 1 of the present invention further comprises a support 4, which is intended to support the ABS unit 2 and said at least one dividing valve 3, 3'. Therefore, such a support 4 comprises a housing compartment 5 for the ABS unit 2 and at least one housing seat 6 for said at least one dividing valve 3, 3'. The housing seat 6 is positioned so that it is adjacent to the housing compartment 5. In other words, it may be located either by the side of the housing compartment 5 or to the front, rear, upper or lower thereof, provided that it is close to it so as to create a compact, space-saving system 1.

In the embodiments shown in figures 1-3, the system 1 is provided with a single housing seat 6, which is located laterally to the housing compartment 5 and is adapted to accommodate two dividing valves 3, 3'. Such a housing seat 6 shares a wall 12 with the housing compartment 5 of the ABS unit 2.

Alternatively, the system 1 may have a housing seat 6 for a first dividing valve 3 on one side of housing compartment 5 and a housing seat 6 for a second dividing valve 3' at the opposite side of housing compartment 5, so that, once the system 1 is assembled, the dividing valves 3, 3' are each arranged on one side of the ABS unit 2.

Preferably, the support 4 is made of a single piece, i.e. is a monolithic structure, preferably made of composite or plastic material. The composite material should preferably comprise polyamide or the like.

Alternatively, the support 4 may be made of metal material, such as sheet metal or aluminum casting.

It is made by molding using methods and technologies of a known type.

According to alternative embodiments, the support 4 comprises two or more portions which are rigidly connected to one another. For example, housing compartment 5 and housing seat 6 could be manufactured separately, even with different materials, and connected together by means of special mechanical connection means, so as to form a compact structure.

According to the preferred embodiment, shown in figures 1-3, there are two dividing valves 3, 3' and they are both positioned in the same housing seat 6, but they could be each placed in a corresponding housing seat 6, as mentioned above.

The number of dividing valves 3, 3' present in system 1, depends on the motor vehicle or motorcycle in which the ABS is to be fitted, or on the type of braking system chosen for the motor vehicle or motorcycle. Normally, in presence of two brake pumps 10, 11, 14, e.g. each at a relative brake lever 15, 16 of the handlebar, or one at a brake lever 15, 16 and one at the brake pedal 17, the presence of a single dividing valve 3, 3' is expected. While when the braking system of a vehicle comprises three brake pumps 10, 11, 14, e.g., one for each of the two brake levers 16, 15 and one for the brake pedal 17, the system 1 comprises two dividing valves 3, 3'. However, different cases could be provided.

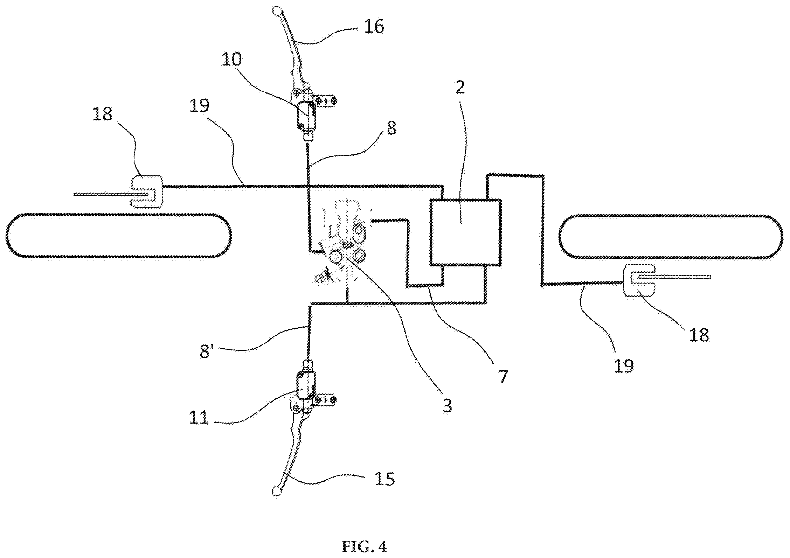

Figure 4 shows an example of a diagram of a brake system with which the system 1 of the present invention may be used. Such a brake system comprises an ABS unit 2, a dividing valve 3, a first pump 10 at a right brake lever 16 and a second pump 11 at a left brake lever 15.

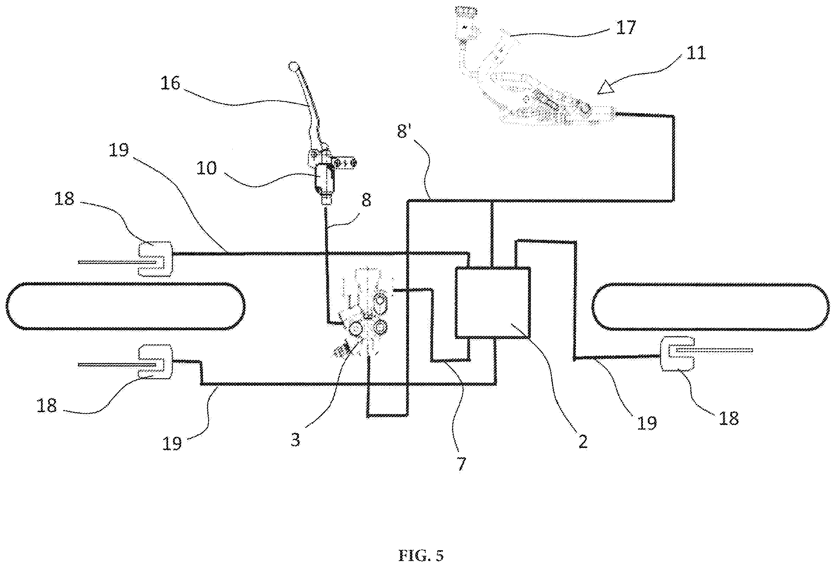

Figure 5 shows a further example of a diagram of a braking system with which the system 1 according to the present invention can be used. Such a brake system comprises an ABS unit 2, a dividing valve 3, a first pump 10 at a right brake lever 16 and a second pump 11 at a brake pedal 17.

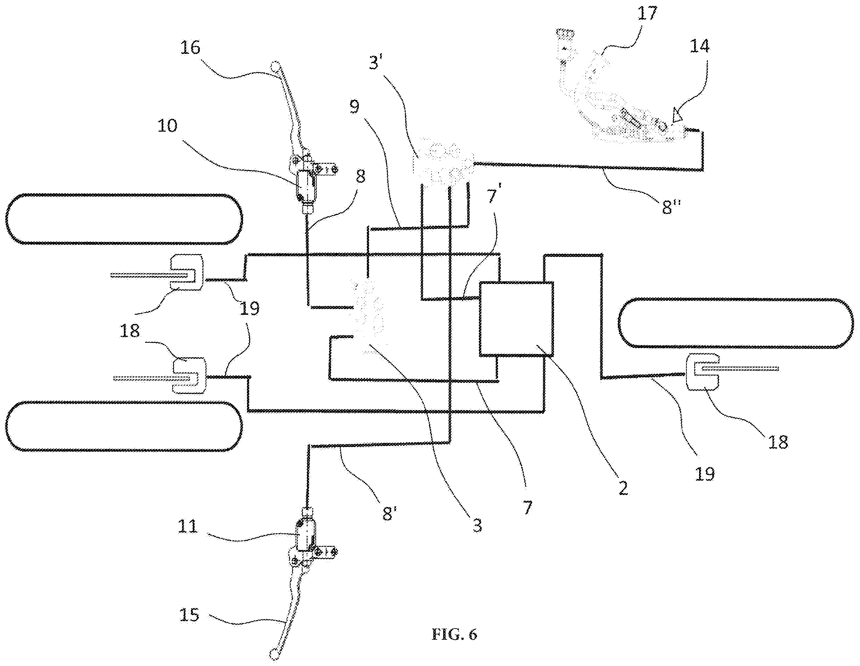

Figure 6 shows a further example of a diagram of a braking system with which the system 1 according to the present invention can be used. Such a brake system is provided with an ABS unit 2, two dividing valves 3, 3', a first pump 10 at a right brake lever 16, a second pump 11 at a left brake lever 15 and a third pump 14 at a brake pedal 17.

These are just examples because the system 1 of the present invention can be used with basically all types of brake systems for motorcycles or motor vehicles available on the market.

The support 4 is fixed to the frame of the vehicle on which it is mounted by means of screws, or equivalent means, inserted in holes 13.

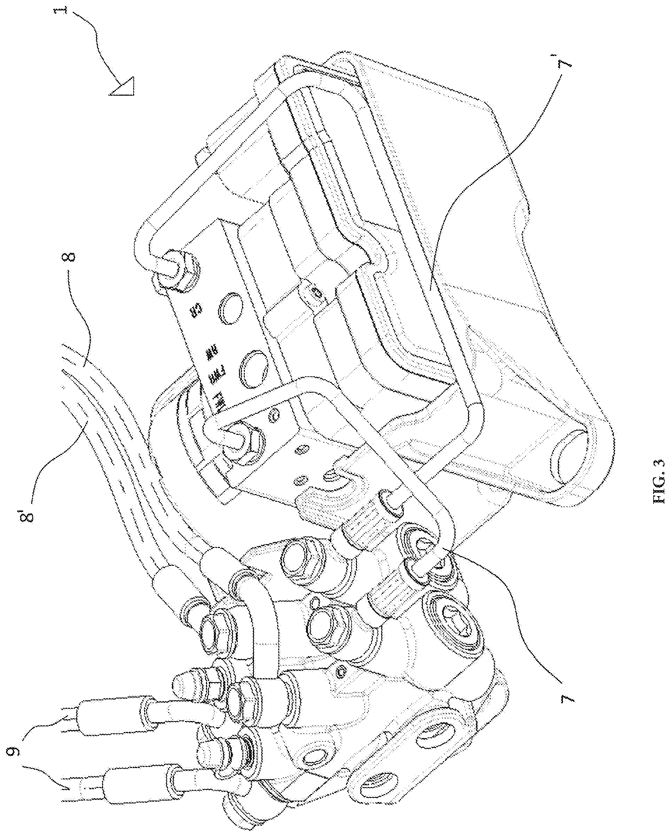

The system 1, according to preferred embodiments, further comprises at least a first connection tube 7, 7' between the ABS 2 unit and said at least one dividing valve 3, 3'. In particular, in the cases shown in figures 4 and 5, the system 1 comprises only one first tube 7, while in the embodiment shown in figures 3 and 6, such first tubes 7, 7' are two, one for each dividing valve 3, 3'. In particular, a first tube 7 connects the first dividing valve 3 to the ABS unit 2 and a further first tube 7' connects the second dividing valve 3' to the ABS unit 2 itself. As shown above all in figure 3, the first tubes 7, 7' are rigid tubes, preferably made of metal material, e.g. steel.

The system 1 further comprises at least two second connection tubes 8, 8' between at least one dividing valve 3, 3' and at least two brake system pumps 10, 11, 14. In particular, in the case of the braking system shown in figure 4, the system 1 comprises a second tube 8 connecting the dividing valve 3 to a first pump 10 of a braking system and a second tube 8' connecting the dividing valve 3 itself to a second pump 11 of the braking system. The first pump 10 relates to the right brake lever 16, while the second pump 11 relates to the left brake lever 15.

Similarly, in the case of the braking system shown in figure 5, the system 1 comprises a second connection tube 8 between the dividing valve 3 and a first pump 10 of a braking system and a further second connection tube 8' between the dividing valve 3 itself and a second pump 11 of the braking system. However, while the second pump 11 in figure 4 is the pump of a left brake lever 15, the second pump 11 in figure 4 is related to a brake pedal 17.

In the case of the braking system shown in figure 6, instead, the system 1 comprises a second tube 8 connecting the first dividing valve 3 to a first pump 10 of a braking system, a further second connection tube 8' between said at least one dividing valve 3' and a second pump 11 of a braking system and a further second connection tube 8" between said at least one dividing valve 3' and a second pump 14 of the braking system. In such a case, the first pump 10 relates to the right brake lever 16, the second pump 11 to the left brake lever 15 and the third pump 14 to the brake pedal 17.

In figures 3 and 6, it is also worth noting that the system 1, in such embodiments, further comprises at least one third connection tube 9 between the two dividing valves 3, 3'.

As shown in figures 4, 5 and 6, the ABS unit 2 is then connected to the brake calipers 18 by means of further tubes 19. The latter are adapted to communicate with the ABS unit 2, the information which allows the ABS 2 unit itself to operate.

In the example in figure 4, there are two of such further tubes 19, one for each brake caliper 18 which are arranged at a front wheel and at a lower wheel of the motorcycle or motor vehicle, respectively. Instead, there are three further tubes 19 in the example in figure 5: two tubes are adapted to connect two brake calipers 18 of the same front wheel to the ABS unit 2 and one tube is adapted to connect a brake caliper 18 of the rear wheel to the ABS 2 unit itself.

Finally, there are three further tubes 19 in the example in figure 6; two tubes are adapted to connect two brake calipers 18 of two corresponding front wheels with the ABS unit 2 and one tube is adapted to connect a brake caliper 18 of the rear wheel with the ABS unit 2 itself.

The present invention further relates to a motorcycle or motor vehicle comprising a system 1 as described above.

Advantageously, the system 1 is positioned at the handlebar of the motorcycle or motorbike itself. Preferably, the system 1 is located at the front shield of the frame, below the handlebar of the vehicle, so as to achieve short piping and the respective advantages mentioned above.

An assembly method of an ABS on a motorcycle or motor vehicle according to the present invention will now be described.

With a system 1 for ABS as described above, it is possible to pre-assemble such a system 1 and its piping, by implementing the following pre-steps off-line:
a. mounting an ABS unit 2 in a housing compartment 5 of a support 4;
b. mounting at least one dividing valve 3, 3' in a special housing seat 6 of the support 4 itself, adjacent to the housing compartment 5;
c. connecting at least one first connection tube 7, 7' between the ABS unit 2 and said at least one dividing valve 3, 3' at both its ends;
d. connecting at least two second connection tubes 8, 8' between said at least one dividing valve 3, 3' and at least two pumps 10, 11, 14 of the braking system, at at least one dividing valve 3, 3'.

In the embodiments shown in figures 3 and 6, i.e. in presence of two dividing valves 3, 3', step b provides mounting a first dividing valve 3 and a second dividing valve 3' in the housing seat 6; step c provides connecting a first tube 7' between the ABS unit 2 and a first dividing valve 3 and a further first tube 7' between the ABS unit 2 and a second dividing valve 3'; step d provides connecting a second connection tube 8 (intended to connect the first dividing valve 3 to the first pump 10 of the braking system) at said first valve 3 and a further second tube 8' (intended to connect the second dividing valve 3' to the second pump 11 of the braking system) at said second valve 3'.

Furthermore, in such an embodiment, the method provides the implementation of a further step:
e. connecting at least one third connection tube 9 between the two dividing valves 3, 3', at both ends.

In such a manner, as explained above, it is possible to assemble in line only system 1, pre-assembled by means of steps from a to e, on a motorcycle or motor vehicle and to connect the free ends of the second connection tubes 8, 8' and the additional tubes 19, to complete the assembly of an ABS quickly and easily.

## Claims

1. A system (1) comprising an ABS unit (2) for the wheels of a vehicle, at least one dividing valve (3, 3') and a support (4), comprising a housing compartment (5) for the ABS unit (2) and **characterized by** comprising at least one housing seat (6) for said at least one dividing valve (3), said at least one housing seat (6) being positioned to be adjacent to the housing compartment (5).

2. The system (1) according to claim 1, wherein said support (4) is made in a single piece.

3. The system (1) according to claim 1 or 2, wherein the dividing valves (3, 3') are two in number and are both positioned in the same housing seat (6), or each in a corresponding housing seat (6).

4. The system (1) according to any one of the preceding claims, further comprising at least a first connection tube (7, 7') between the ABS unit (2) and said at least one dividing valve (3, 3'), wherein said first tube (7, 7') is a rigid tube.

5. The system (1) according to claim 4, when depending on claim 3, wherein said first connection tubes (7, 7') are two in number, one for each dividing valve (3, 3').

6. The system (1) according to any one of the preceding claims, further comprising at least two second connection tubes (8, 8'): a second connection tube (8) between said at least one dividing valve (3, 3') and first pump (10) of a braking system and a further second connection tube (8') between said at least one dividing valve (3, 3') and a second pump (11) of the braking system.

7. The system (1) according to any one of the preceding claims, when depending on claim 3, further comprising at least a third connection tube (9) between the two dividing valves (3).

8. The system (1) according to claim 1, 2 or 4, when depending on claim 1 or 2, comprising a single dividing valve (3), which is:
- connected to the ABS unit (2) by means of a first tube (7);
- connected to the first pump (10) of a right brake lever (16) by means of a second tube (8); and
- connected to the second pump (11) of a left brake lever (15) by means of a further second tube (8');
the ABS unit (2) being connected to a brake caliper (18) of a front wheel of a motorcycle or motor vehicle by means of a further tube (19) and to a brake caliper (18) of a rear wheel of a motorcycle or motor vehicle by means of a further tube (19).

9. The system (1) according to claim 1, 2 or 4, when depending on claim 1 or 2, comprising a single dividing valve (3), which is:
- connected to the ABS unit (2) by means of a first tube (7);
- connected to the first pump (10) of a right brake lever (16) by means of a second tube (8); and
- connected to the second pump (11) of a brake pedal (17) by means of a further second tube (8');
the ABS unit (2) being connected to two brake calipers (18) of the same front wheel of a motorcycle or motor vehicle by means of two respective further tubes (19) and to a brake caliper (18) of a rear wheel of a motorcycle or motor vehicle by means of a further tube (19).

10. The system (1) according to any one of the claims 1 - 5, comprising:
• a first dividing valve (3), which is:
- connected to the ABS unit (2) by means of a first tube (7);
- connected to the first pump (10) of a right brake lever (16) by means of a second tube (8); and
- connected to a second dividing valve (3') by means of a third tube (9);
• a second dividing valve (3'), which is:
- connected to the ABS unit (2) by means of a further first tube (7');
- connected to the second pump (11) of a left brake lever (15) by means of a further second tube (8');
- connected to a third pump (14) of a brake pedal (17) by means of a last second tube (8"); and
- connected to the first dividing valve (3) by means of said third tube (9);
the ABS unit (2) being connected to two brake calipers (18) of two corresponding front wheels of a motorcycle or motor vehicle by means of two respective further tubes (19) and to a brake caliper (18) of a rear wheel of a motorcycle or motor vehicle by means of a further tube (19).

11. A motorcycle or motor vehicle comprising a system (1) according to one of the preceding claims.

12. The motorcycle or motor vehicle according to claim 11, wherein said system (1) is positioned at the handlebar of the motorcycle or motor vehicle.

## Patentansprüche

1. System (1), das eine ABS-Einheit (2) für die Räder eines Fahrzeugs, mindestens ein Mengenteilerventil (3, 3') und einen Träger (4) umfasst, der ein Gehäusefach (5) für die ABS-Einheit (2) umfasst und **dadurch gekennzeichnet ist, dass** er mindestens einen Gehäusesitz (6) für das mindestens eine Mengenteilerventil (3) umfasst, wobei der mindestens eine Gehäusesitz (6) derart positioniert ist, dass er an das Gehäusefach (5) angrenzt.

2. System (1) nach Anspruch 1, wobei der Träger (4) in einem einzigen Stück hergestellt ist.

3. System (1) nach Anspruch 1 oder 2, wobei die Mengenteilerventile (3, 3') zwei an der Zahl sind und beide in demselben Gehäusesitz (6) oder jeweils in einem entsprechenden Gehäusesitz (6) positioniert sind.

4. System (1) nach einem der vorhergehenden Ansprüche, das ferner mindestens ein erstes Verbindungsrohr (7, 7') zwischen der ABS-Einheit (2) und dem mindestens einen Mengenteilerventil (3, 3') umfasst, wobei das erste Rohr (7, 7') ein starres Rohr ist.

5. System (1) nach Anspruch 4, wenn abhängig von Anspruch 3, wobei die ersten Verbindungsrohre (7, 7') zwei an der Zahl sind, eines für jedes Mengenteilerventil (3, 3').

6. System (1) nach einem der vorhergehenden Ansprüche, das ferner mindestens zwei zweite Verbindungsrohre (8, 8') umfasst: ein zweites Verbindungsrohr (8) zwischen dem mindestens einen Mengenteilerventil (3, 3') und einer ersten Pumpe (10) eines Bremssystems und ein weiteres zweites Verbindungsrohr (8') zwischen dem mindestens einen Mengenteilerventil (3, 3') und einer zweiten Pumpe (11) des Bremssystems.

7. System (1) nach einem der vorhergehenden Ansprüche, wenn abhängig von Anspruch 3, das ferner mindestens ein drittes Verbindungsrohr (9) zwischen den zwei Mengenteilerventilen (3) umfasst.

8. System (1) nach Anspruch 1, 2 oder 4, wenn abhängig von Anspruch 1 oder 2, das ein einziges Mengenteilerventil (3) umfasst, das:
- mit der ABS-Einheit (2) mittels eines ersten Rohrs (7) verbunden ist;
- mit der ersten Pumpe (10) eines rechten Bremshebels (16) mittels eines zweiten Rohrs (8) verbunden ist; und
- mit der zweiten Pumpe (11) eines linken Bremshebels (15) mittels eines weiteren zweiten Rohrs (8') verbunden ist;
wobei die ABS-Einheit (2) mittels eines weiteren Rohrs (19) mit einem Bremssattel (18) eines Vorderrades eines Motorrades oder Kraftfahrzeuges und mittels eines weiteren Rohrs (19) mit einem Bremssattel (18) eines Hinterrades eines Motorrades oder Kraftfahrzeuges verbunden ist.

9. System (1) nach Anspruch 1, 2 oder 4, wenn abhängig von Anspruch 1 oder 2, das ein einziges Mengenteilerventil (3) umfasst, das:
- mit der ABS-Einheit (2) mittels eines ersten Rohrs (7) verbunden ist;
- mit der ersten Pumpe (10) eines rechten Bremshebels (16) mittels eines zweiten Rohrs (8) verbunden ist; und
- mit der zweiten Pumpe (11) eines Bremspedals (17) mittels eines weiteren zweiten Rohrs (8') verbunden ist;
wobei die ABS-Einheit (2) mittels zwei jeweiliger weiterer Rohre (19) mit zwei Bremssatteln (18) desselben Vorderrades eines Motorrades oder Kraftfahrzeuges und mittels eines weiteren Rohrs (19) mit einem Bremssattel (18) eines Hinterrades eines Motorrades oder Kraftfahrzeuges verbunden ist.

10. System (1) nach einem der vorhergehenden Ansprüche 1-5, umfassend:
• ein erstes Mengenteilerventil (3), das:
- mit der ABS-Einheit (2) mittels eines ersten Rohrs (7) verbunden ist;
- mit der ersten Pumpe (10) eines rechten Bremshebels (16) mittels eines zweiten Rohrs (8) verbunden ist; und
- mit einem zweiten Mengenteilerventil (3') mittels eines dritten Rohrs (9) verbunden ist;
• ein zweites Mengenteilerventil (3'), das:
- mit der ABS-Einheit (2) mittels eines weiteren ersten Rohrs (7') verbunden ist;
- mit der zweiten Pumpe (11) eines linken Bremshebels (15) mittels eines weiteren zweiten Rohrs (8') verbunden ist;
- mit einer dritten Pumpe (14) eines Bremspedals (17) mittels eines letzten zweiten Rohrs (8") verbunden ist; und
- mit dem ersten Mengenteilerventil (3) mittels des dritten Rohrs (9) verbunden ist;
wobei die ABS-Einheit (2) mittels zwei jeweiliger weiterer Rohre (19) mit zwei Bremssatteln (18) von zwei entsprechenden Vorderrädern eines Motorrades oder Kraftfahrzeuges und mittels eines weiteren Rohrs (19) mit einem Bremssattel (18) eines Hinterrades eines Motorrades oder Kraftfahrzeuges verbunden ist.

11. Motorrad oder Kraftfahrzeug mit einem System (1) nach einem der vorhergehenden Ansprüche.

12. Motorrad oder Kraftfahrzeug nach Anspruch 11, wobei das System (1) an der Lenkstange des Motorrads oder Kraftfahrzeugs positioniert ist.

## Revendications

1. Système (1) comprenant une unité ABS (2) pour les roues d'un véhicule, au moins une soupape de division (3, 3') et un support (4), comprenant un compartiment de logement (5) pour l'unité ABS (2) et **caractérisé en ce qu'**il comprend au moins un siège de logement (6) pour ladite au moins une soupape de division (3), ledit au moins un siège de logement (6) étant positionné pour être adjacent au compartiment de logement (5).

2. Système (1) selon la revendication 1, dans lequel ledit support (4) est réalisé en une seule pièce.

3. Système (1) selon la revendication 1 ou 2, dans lequel les soupapes de division (3, 3') sont au nombre de deux et les toutes deux positionnées dans le même siège de logement (6), ou chacune dans un siège de logement correspondant (6).

4. Système (1) selon l'une quelconque des revendications précédentes, comprenant en outre au moins un premier tube de connexion (7, 7') entre l'unité ABS (2) et ladite au moins une soupape de division (3, 3'), dans lequel ledit premier tube (7, 7') est un tube rigide.

5. Système (1) selon la revendication 4, lorsqu'elle dépend de la revendication 3, dans lequel lesdits premiers tubes de connexion (7, 7') sont au nombre de deux, un pour chaque soupape de division (3, 3').

6. Système (1) selon l'une quelconque des revendications précédentes, comprenant en outre au moins deux deuxièmes tubes de connexion (8, 8') : un deuxième tube de connexion (8) entre ladite au moins une soupape de division (3, 3') et la première pompe (10) d'un système de freinage et un ultérieur deuxième tube de connexion (8') entre ladite au moins une soupape de division (3, 3') et une deuxième pompe (11) du système de freinage.

7. Système (1) selon l'une quelconque des revendications précédentes, lorsqu'elles dépendent de la revendication 3, comprenant en outre au moins un troisième tube de connexion (9) entre les deux soupapes de division (3).

8. Système (1) selon la revendication 1, 2 ou 4, lorsqu'elles dépendent de la revendication 1 ou 2, comprenant une soupape de division unique (3), qui est :
- reliée à l'unité ABS (2) au moyen d'un premier tube (7) ;
- reliée à la première pompe (10) d'un levier de frein droit (16) au moyen d'un deuxième tube (8) ; et
- reliée à la deuxième pompe (11) d'un levier de frein gauche (15) au moyen d'un ultérieur deuxième tube (8') ;
l'unité ABS (2) étant reliée à un étrier de frein (18) d'une roue avant d'une motocyclette ou d'un véhicule à moteur au moyen d'un ultérieur tube (19) et à un étrier de frein (18) d'une roue arrière d'une motocyclette ou d'un véhicule à moteur au moyen d'un ultérieur tube (19).

9. Système (1) selon la revendication 1, 2 ou 4, lorsqu'elles dépendent de la revendication 1 ou 2, comprenant une soupape de division unique (3), qui est :
- reliée à l'unité ABS (2) au moyen d'un premier tube (7) ;
- reliée à la première pompe (10) d'un levier de frein droit (16) au moyen d'un deuxième tube (8) ; et
- reliée à la deuxième pompe (11) d'une pédale de frein (17) au moyen d'un ultérieur deuxième tube (8') ;
l'unité ABS (2) étant reliée à deux étriers de frein (18) de la même roue avant d'une motocyclette ou d'un véhicule à moteur au moyen de deux ultérieurs tubes respectifs (19) et à un étrier de frein (18) d'une roue arrière d'une motocyclette ou d'un véhicule à moteur au moyen d'un ultérieur tube (19).

10. Système (1) selon l'une quelconque des revendications 1 à 5, comprenant :
• une première soupape de division (3), qui est :
- reliée à l'unité ABS (2) au moyen d'un premier tube (7) ;
- reliée à la première pompe (10) d'un levier de frein droit (16) au moyen d'un deuxième tube (8) ; et
- reliée à une deuxième soupape de division (3') au moyen d'un troisième tube (9) ;
• une deuxième soupape de division (3'), qui est :
- reliée à l'unité ABS (2) au moyen d'un ultérieur premier tube (7') ;
- reliée à la deuxième pompe (11) d'un levier de frein gauche (15) au moyen - d'un ultérieur deuxième tube (8') ;
- reliée à une troisième pompe (14) d'une pédale de frein (17) au moyen d'un dernier deuxième tube (8") ; et
- reliée à la première soupape de division (3) au moyen dudit troisième tube (9)
l'unité ABS (2) étant reliée à deux étriers de frein (18) des deux roues avant correspondantes d'une motocyclette ou d'un véhicule à moteur au moyen de deux ultérieurs tubes respectifs (19) et à un étrier de frein (18) d'une roue arrière d'une motocyclette ou d'un véhicule à moteur au moyen d'un ultérieur tube (19).

11. Motocyclette ou véhicule à moteur comprenant un système (1) selon l'une des revendications précédentes.

12. Motocyclette ou véhicule à moteur selon la revendication 11, dans lequel ledit système (1) est positionné au niveau du guidon de la motocyclette ou du véhicule à moteur.
